# EUROPEAN PATENT APPLICATION

(11) **EP 1 919 146 A2**
(43) Date of publication of application: **07.05.2008**
(21) Application number: 07380303.3
(22) Date of filing: 06.11.2007
(51) Int. Cl.: H04L 12/58

(54) **Method, system and terminal device for transmitting and receiving messages**

(30) Priority: 06.11.2006 ES 200602809
(71) Applicant: Vodafone Group PLC, Newbury Berkshire RG14 2FN (GB); Vodafone España, S.A., 28108 Alcobendas (Madrid) (ES)
(72) Inventor: Berna Fornies, Hector, 50018 Zaragoza (ES)
(74) Representative: Carpintero Lopez, Francisco

(57) **Abstract**

The invention relates to a method, system and terminal device for transmitting and receiving messages, comprising:
- at least two terminal devices (2,3) with IP connection to a fixed or mobile network (1), having an agent platform (11) that can execute and launch at least one mobile agent (8), and
- a server node (10) connected to said terminal devices (2, 3) through the network (1) and configured to generate in a centralized manner at least one message (9) comprising a sender field, at least one recipient field and a mobile agent (8) in turn comprising an executable code, configured to be able to interact with the user (6, 6') of the corresponding terminal device (2,3), with its environment (5, 5') and/or with the environment of the surrounding devices (4, 4').

## Description

### FIELD OF THE INVENTION

The present invention applies to the field of telecommunications networks. More specifically, the invention that is described relates to sending, through telecommunications networks that support the IP protocol (Internet protocol), messages comprising mobile agents, from a sender to one or more recipients within a single agent platform or between different mobile agent platforms.

### BACKGROUND OF THE INVENTION

A mobile agent is a type of software agent; particularly it is a software entity carrying out certain activities on behalf of another entity or person (the user) for the purpose of completing a task, and having a certain degree of autonomy in its actions, sociability with other agents, reactivity in situations in the environment and proactivity with the elements interacting with it in carrying out its function, in addition to the ability to travel through a computer or telecommunications network, interacting with external servers and being able to collect information on behalf of its user to return after completing the previously set tasks. In other words, a mobile agent has the following properties:
- It is intelligent, because it can learn from experience, memorize data and situations and deduce conclusions.
- It is autonomous, because its life cycle is monitored and it makes its own decisions.
- It is reactive, being able to interact with its environment, perceiving changes and generating responses to them. The environment of the mobile agent is determined by the features, the data and the status of the devices in which said agent resides and migrates, and of the devices that can be accessed through Personal Area Networks (PAN) and Local Area Networks (LAN) from the devices in which the agent resides/migrates.
- It is cooperative, because it can cooperate with other mobile agents or other intelligent systems, coordinating with one another to carry out complex tasks.
- It is mobile, because it has the capacity to migrate or move between different locations by means of one or more mobile agent platforms involved between the origin and destination.

It must be observed that in this definition, the term "mobile" of the expression "mobile agent" is not limited to the scope of mobile telephony or wireless communications, but rather it can be applied to any type of computer or telecommunications network and indicates that said agent can migrate or move between different locations.

Despite their autonomy and capacity to move, mobile agents need the support of an agent platform (also called "agent framework") providing them with the basic services within the system of agents to which they belong. The agent platform is constructed as a set of service applications located in each device of the system of agents, said device being able to be any terminal belonging to a computer or telecommunications network and having a Internet connection. A directory of mobile agents, the persistence of mobile agents, the communication between different elements of the platform or the management of the life cycle of the agent, for example, can be mentioned among the services that agent platforms can provide to a mobile agent.

There are currently several agent platforms allowing the mobility of their agents. These known platforms are mostly housed in known servers having an assigned static IP, such that their identification in the system is simple. Each agent platform must provide the way to identify the elements belonging to a system of agents and the services provided by them. To that end, one or several registers centralizing the system from the server are created. In this way, the agents consult a service of their platform which in turn is in contact with the server to obtain the necessary information.

The FIPA (Foundation for Intelligent Physical Agents) is the organization formed with the aim of producing standard specifications for agents and systems based on agents, including mobile agents. It currently depends on the Standards Committee of the IEEE Computer Society. The FIPA specifications represent a collection of standards attempting to promote interoperability between heterogeneous agents and the services they may represent.

A mobile agent is essentially formed by the following parts:
- Code: it is a program code executed in the agent to carry out its tasks and functionality.
- Identity: it is a unique and global agent identifier (AID) within a given agent platform.
- Life cycle status: it is an information field indicating the state of execution of the agent.
- Additional data: it is an information field containing parameters relating to the actual programmed logic of the agent.

The mobile agent is self-contained, because it has all the data it needs to be executed and migrate to any location.

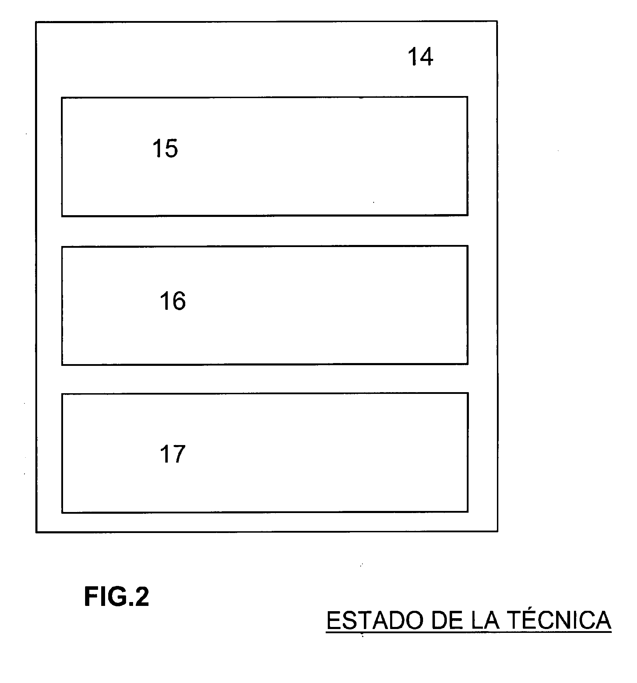

An agent platform is identified as one more agent within the system, with a unique identity. The standard structure of an agent identity (14) or identifier, like the structure of an agent platform identity, i.e. the AID of a mobile agent -or of an agent platform associated to the former and/or other agents-, is made up, as illustrated in Figure 2, of:
- A name field (15) the value of which is a global unique identifier that can be used as a unique reference expression of the agent -or the agent platform-. The FIPA recommends combining the name of the mobile agent with the address of the agent platform where it is created, separated by the character '@'. Therefore, the name field (2) usually has assigned thereto the association: AgentName@HomeAgentPlatformAddress.
- Optionally, an address field (16), formed by a list of transport addresses towards where a message can be sent.
- And also a last optional field called resolvers (17), made up of a list of name resolution service addresses.

A mobile agent provides certain technical advantages:
- Reduction of data transmission through the network for client-server applications when partial results involve a large amount of data, since the mobile agent can travel to the service provider carrying out the complete task and returning with the end result.
- Reduction of the impact on the network disconnections, since the mobile agent travels to the destination carrying out a task locally and the agent itself manages its return.
- Autonomous activities which may persist being carried out despite a possible failure in the host server.
- Use of services and resources that other elements in the network (more powerful processors, algorithms, databases, hardware, etc...) provide.
- Coordination of actions between several agents.

In addition, different messaging services are well-known today and commonly used both in fixed networks and in cellular or wireless networks. More particularly, SMS (Short Message Service) and MMS (Multimedia Message Service) messaging services are provided in current wireless communication networks. The use of Instant Messaging (IM) is widespread in fixed networks, which is defined as a set of programs which, using the TCP-IP protocol, are used to send and receive messages with other users connected to the Internet or other instant mode networks, i.e. it differs from e-mail in that the conversations are carried out in real time and it knows when users are available to talk. The most widely used instant messengers to date are ICQ, Yahoo! Messenger, MSN Messenger, AIM (Aol Instant Messenger) and Google Talk.

For current messaging services, message sending has been developed for messages including text, fixed images, video, audio and other additional information associated to the previous contents, such as PIM (Personal Information Management), DRM (Digital Rights Management), etc., in mobile or cellular telephony systems. However, no messaging service is known which includes sending software agents, specifically mobile agents, which allow executing tasks in remote terminals with respect to the originating terminal and which can return the results of such execution to said originating terminal.

### DESCRIPTION OF THE INVENTION

The present invention provides a method of transmitting and receiving messages between terminal devices of a telecommunications network, applied both for fixed networks and mobile or cellular networks, supporting the IP protocol (Internet protocol), the method being based on mobile agent technology and forming an improved messaging service with regard to the known SMS, MMS or IM systems.

Therefore, one aspect of the invention is a system for transmitting and receiving messages between terminal devices of a telecommunications network, comprising:
- At least two terminal devices, which are fixed or mobile, having an IP connection to the network and each terminal has a known agent platform, for example implemented in Java, such as the JADE platform (Java Agent Development Platform), ZEUS, Grasshopper, Tracy, etc. Regardless of its implementation (outside the scope of this invention), the agent platform is enabled to execute and launch at least one mobile agent between at least said two terminal devices.
- A server node connected through the same IP-based network to at least said terminal devices and configured to generate in a centralized manner at least one message, which can be called an enriched message, and therefore the server node is called an enriched messaging server. The enriched message herein referred to contains a sender field, at least one recipient field and a mobile agent in turn comprising an executable code and an agent identifier, as defined in the state of the art.

Another aspect of the invention relates to a method for transmitting and receiving messages between terminal devices of a telecommunications network, in which at least one first terminal device and at least one second terminal device with their respective agent platforms are distinguished, comprising the following steps:
- Generating a message of the type herein called enriched messages, i.e. comprising a sender field, at least one recipient field and a mobile agent. The mobile agent as such, according to its definition in the state of the art, has an executable code and an agent identifier.
- Downloading the enriched message to the first terminal device. It is understood that downloading is the computer action by means of which information, in this case the enriched message, which does not reside in the device of a user comes to reside therein by means of a transfer through a network from an element of said network, in this case the enriched messaging server node, which does house it. The download is usually made up of two phases; in the first phase the terminal contacts the server and indicates which message it requires, and in the second phase the server, which in this case is the only point of the network where such enriched messages are generated, begins to send it the message (for example, in larger or smaller sized blocks).
- Assigning an identifier of the first terminal device to the sender field of the message and assigning an identifier of the at least one second terminal device to the said at least one recipient field of the message. The enriched message has a single sender but it may have multiple recipients.
- Setting up communication between the respective agent platforms of the first and second terminal device so as to designate a mobile agent launch/migration channel.
- Transmitting the enriched message from said first terminal device to said at least one second terminal device;
- Receiving in said at least one second terminal device the executable code of the mobile agent. This second terminal device, representing one of the recipients of the enriched message, extracts said executable code of the mobile agent from the actual enriched message which the first terminal device, i.e. the sender, downloaded.
- Executing said code of the mobile agent in said at least one second terminal device. When the enriched message reaches the recipient it executes the tasks which the agent contained in the message has assigned. These tasks can involve interaction with the user of said second terminal device and/or with the environment of the agent, including both the environment of the second terminal device and the environment of possible surrounding devices.

The creation of enriched messages is carried out in a single centralized point different from the enriched message sending and receiving terminal devices, herein referred to as the Enriched Message server node. Said node of the network is controlled and managed by the operator of the enriched messaging service. Therefore, a user cannot directly create an enriched message from the mobile or fixed terminal device with which it has the enriched messaging service. In order to have an enriched message it is necessary for the user to download the enriched message from this Enriched Message server node. The creation of the enriched messages is carried out directly by the operator of the enriched messaging service or by third parties having enriched message creation tools. These tools will be provided by the operator of the enriched messaging service.

When generating an enriched message, empty sender and recipient fields are initially created, without containing a specific value. The enriched message server completes the sender field, assigning the corresponding identifier of the first terminal device. And then this first terminal device (sender terminal) completes each of the recipient fields the user desires, assigning the corresponding identifiers of the terminal devices to which said user wants to send the enriched message.

Each enriched message, depending on the functionality and purpose of the mobile agent it contains and depending on its interaction with the users and its environment, carries out certain tasks in the recipient and even in the sender.

Therefore, depending on the functionality and purpose of the agent comprised in the enriched message downloaded by the first terminal device or sender terminal, the mobile agent interacts with the user of said sender terminal and/or with the environment of said sender terminal and of the surrounding devices, before migrating or being sent to the recipients, or in contrast, it is directly received in said recipients without performing any prior task in the sender.

Then, once the agent code is received in the second terminal device or recipient terminal and said code is executed, optionally and depending on the result of the execution of the tasks and on the interaction or on the actual functionality and purpose of the agent, the latter can return to the sender or remain in the destination. If the enriched message with the agent remains in the destination, the sequence thereof ends. If the enriched message returns to the sender, the agent of the enriched message executes the tasks it has been assigned upon its return to the sender. These tasks can again involve interaction with the user and/or the environment of the agent.

Another aspect of the invention is also a terminal device of a telecommunications network which, comprising an agent platform, further comprises:
- means for downloading through said network at least one enriched message containing a sender field, at least one recipient field and a mobile agent;
- means for sending and receiving said at least one enriched message through the network, using an IP connection.

The agent platform of the terminal device comprises means for executing at least one mobile agent contained in an enriched message.

The terminal device proposed for this purpose can be fixed, such as a computer connected to the Internet, or it can be a wireless terminal, for example, a PDA or a mobile telephone supporting any of the existing standards: GPRS, UMTS or WiMAX,...

A final aspect of the invention includes a telecommunications network comprising at least one of the proposed terminal devices, adapted as described above for transmitting/receiving enriched messages, being able to combine fixed or mobile terminals.

### BRIEF DESCRIPTION OF THE DRAWINGS

For the purpose of aiding to better understand the features of the invention according to a preferred practical embodiment thereof and to complement this description, a set of illustrative and non-limiting drawings is attached as an integral part thereof. In these drawings:
Figure 1 shows the architecture in blocks of the system for transmitting and receiving messages between terminal devices according to an embodiment of the invention.
Figure 2 shows a schematic representation of an identifier of a mobile agent which in structure is appropriately identical to an identity of an agent platform, as defined in the state of the art.

### DETAILED DESCRIPTION OF THE INVENTION

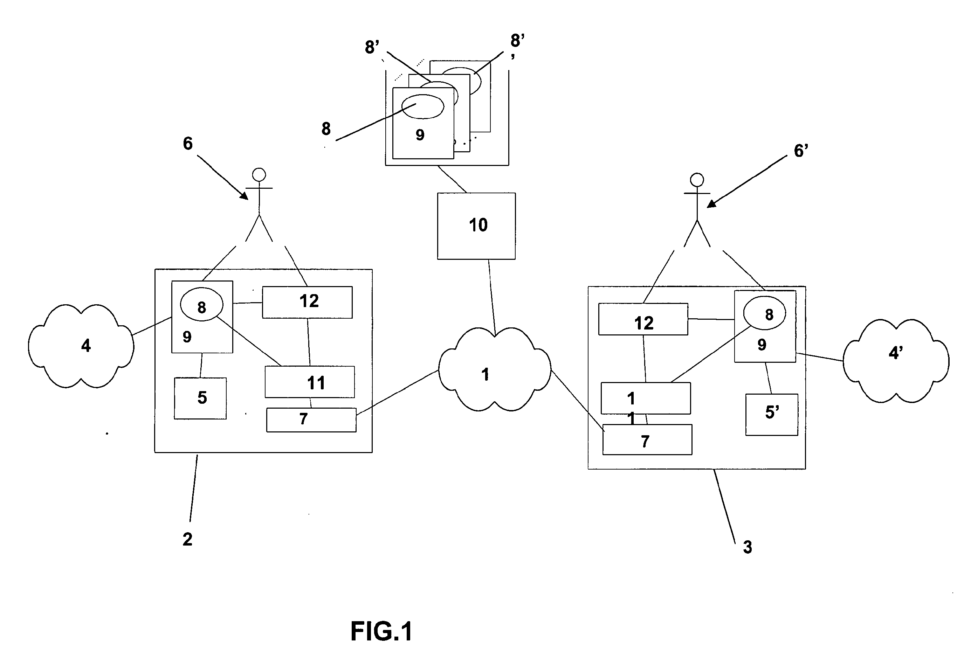

Figure 1 shows a user (6) of a first terminal device (2) acting as a sender in the enriched messaging application and another user (6') of a second terminal device (3) acting as one of the possible recipients of an enriched message (9). Both terminal devices (2, 3) have IP connection (7) to a fixed or mobile network (1) and incorporate an agent platform (11) communicating with an enriched messaging module (12) that can interact with the user for:
- downloading at least one enriched message (9) from an enriched messaging server node (10) connected to the network (1).
- sending the enriched message (9) to one or several recipients.

Said enriched message (9) contains a mobile agent (8) interacting with the enriched messaging server node (10), adding a sender field and one or more recipient fields. Said enriched messaging server node (10) is responsible for assigning to the sender field of the enriched message (9) an identifier of the first terminal device (2), i.e. the one carrying out in interest of the user (6) the request to download the enriched message (9).

Once such download from the server node (10) to the first terminal device (2) is carried out, the enriched message (9) already housed in said first terminal device (2), the user (6) selects it as a result of the enriched messaging module (12), which is responsible for assigning the corresponding identifier of the second terminal device (3), selected by the user (6), to one of the recipient fields of the downloaded enriched message (9). Then, due to a command of the user (6), the enriched messaging module (12) sends the enriched message (9) to that second destination terminal device (3).

The agent platform (11) is unequivocally identified in the IP-based network (1) by an identity (14), which is the same in the sender and recipient terminal devices (2, 3). The identity (14) has assigned in an address field (16) of its structure, the identifier of the terminal device (2, 3) corresponding to it. In setting up IP connection (7) between the first and second terminal device (2, 3), each of said first and second terminal device (2, 3) has been assigned a Uniform Resource Identifier (URI), said URI identifiers being those which in this enriched messaging application are used to unequivocally identify the sender and recipient. Therefore, the respective URI identifiers are assigned in the address field (16) of the identity (14) of the agent platform (11) for each terminal device (2, 3). It must be observed that such URI identifiers can comprise information on the IP addresses that are assigned in said IP connection (7) to each end, i.e. respectively to the first and second terminal device (2, 3).

As a practical embodiment, described below is the case in which the server node (10) generates an enriched message (9) containing a mobile agent (8) the purpose of which is to take a photograph with a camera located in the environment of the second destination terminal device (3), to then store such photograph in the first sender terminal device (2). In this example, the mobile agent (8) does not execute any task before being transmitted from the first terminal device (2) to the second terminal device (3).

An environment of the agent is defined in both the first terminal device (2) and in the second terminal device (3) that is determined by:
- the features, the data and the status of the terminal devices (2, 3) themselves in which the mobile agent (8) resides and migrates, accordingly determining an environment of the terminal device (5, 5'); and
- the features, the data and the status defining an environment of the surrounding devices (4, 4') which are respectively associated to said first and second terminal device (2, 3), which the corresponding terminal device (2, 3) can access through a PAN or LAN network.

When the enriched message (9) reaches the second terminal device (3), the agent platform (11) of this second terminal device (3) executes the mobile agent (8), specifically its photo capture program code, contained in said enriched message (9). In this case, such mobile agent (8) asks the recipient, i.e. the user (6') of the second terminal device (3), if it accepts that a photo be taken with the camera from its environment (4', 5').

Continuing with this example, if the user (6') of the second terminal device (3) answers no to the request asked by the mobile agent (8), the latter returns within the enriched message (9) to the first terminal device (2) and informs the sender user (6). If the recipient user (6') responds affirmatively, the mobile agent (8) carries out a search in the environment (5') of the second terminal device (3), in which the existence of at least one camera is provided. When it is found, the mobile agent (8) commands it to take a photograph and to give it to said agent, After such mobile agent (8) obtains the photograph, the mobile agent (8) itself returns within the enriched message (9), along with said photograph therein contained - as additional data of the agent-, to the first sender terminal device (2). Then, once it is back in said first terminal device (2), the mobile agent (8) interacts with the environment (4, 5) of the first terminal device (2). Therefore, to end its execution now in the first sender terminal device (2), the mobile agent (8) carries out another search, this time in the environment (5) of the first terminal device (2), for example to store the photo take in a memory and, then interacting with the user (6), allows displaying on a screen of this first terminal device (2) the image captured with the camera in the second terminal device (3).

The enriched message (9) in the case set forth as an example remains in the first terminal device (2) and does not execute more tasks until the user (6) commands it to do so through the enriched messaging module (12).

Other mobile agents (8, 8', 8") which can use this enriched messaging module (12) to travel within an enriched message (9) generated by the enriched messaging server node (10) include, for example, functions of:
- Automatically establishing an image sent from one terminal device to another, for example, to a mobile telephone, as the wallpaper, without active interaction of the user of the mobile and without the mobile having to be turned on or having coverage at said moment.
- Automatically and immediately updating a phone book when the message is received from a first terminal in a second mobile terminal.
- Associating a melody to a telephone number in the phone book of a mobile terminal that another first terminal sends to it.

In view of this description and set of drawings, the skilled person in the art could understand that the invention has been described according to several preferred embodiments thereof, but that multiple variations can be introduced in said preferred embodiments, without departing from the object of the invention as it has been claimed.

## Claims

1. A method of transmitting and receiving messages between terminal devices of a telecommunications network (1), wherein at least one first terminal device (2) and at least one second terminal device (3) are distinguished, having an agent platform (11) unequivocally identified in the network (1) by an identity (14), said agent platform (11) able to execute and launch at least one mobile agent (8, 8', 8") between said terminal devices (2, 3), **characterized by** comprising the following steps:
- generating a message (9) comprising a sender field, at least one recipient field and one mobile agent (8) in turn comprising an executable code;
- downloading the message (9) to the first terminal device (2);
- assigning an identifier of the first terminal device (2) to the sender field of the message (9);
- assigning an identifier of the at least one second terminal device (3) to the said at least one recipient field of the message (9);
- setting up a communication channel by means of the agent platform (11) of the first and second terminal device (2, 3) to launch the mobile agent (8) between said first and second terminal device (2, 3);
- transmitting from said first terminal device (2), through the network (1), the downloaded message (9) to said at least one second terminal device (3);
- receiving in said at least one second terminal device (3), through the network (1), the executable code of the mobile agent (8);
- executing said code of the mobile agent (8) in said at least one second terminal device (3).

2. A method according to claim 1, **characterized in that** the generation of the message is carried out in a centralized manner in a server node (10) of the network (1).

3. A method according to any of the previous claims, **characterized in that** the method further comprises, before the step of setting up the communication channel by means of the agent platform, a step of:
- executing at least part of the code of the mobile agent (8) in the first terminal device (2).

4. A method according to any of the previous claims, **characterized in that** the method further comprises, after the step of executing the code of the mobile agent (8) in the second terminal device (3), the steps of:
- transmitting the message (9) from the second terminal device (3) to the first terminal device (2), through the network (1);
- receiving in the first terminal device (2) the executable code of the mobile agent (8),
- executing at least part of the code of the mobile agent (8) in said first terminal device (2).

5. A method according to any of the previous claims, **characterized in that** when at least part of the code of the mobile agent (8) is executed, said mobile agent (8) interacts with a user (6, 6').

6. A method according to any of the previous claims, **characterized in that** when at least part of the code of the mobile agent (8) is executed, said mobile agent interacts with an environment of the agent (4, 4', 5, 5').

7. A method according to any of the previous claims, **characterized in that** the identifiers of the first and second terminal device which are assigned respectively to the sender and recipient fields, consist of URI identifiers with which an IP connection (7) has previously been set up between said first and second terminal device (2, 3) with the network (1).

8. A method according to claim 7, **characterized in that** the URI identifier assigned to the sender field is previously assigned to an address field (16) of the identity (14) of the agent platform (11) in the first terminal device (2).

9. A method according to any of claims 7 or 8, **characterized in that** the URI identifier assigned to said at least one recipient field is previously assigned to an address field (16) of the identity (14) of the agent platform (11) in the second terminal device (3).

10. A method according to any of claims 7 to 9, **characterized in that** the IP connection (7) between the first and second terminal device (2, 3) is set up by means of a fixed link.

11. A method according to any of claims 7 to 9, **characterized in that** the IP connection (7) between the first and second terminal device (2, 3) is set up by means of a wireless link.

12. A system of transmitting and receiving messages between terminal devices of a telecommunications network (1), comprising:
- at least two terminal devices (2,3) having an agent platform (11) that can execute and launch at least one mobile agent (8) between said terminal devices (2, 3);
**characterized by** comprising:
- a server node (10) connected to said terminal devices (2, 3) through the network (1) and configured to generate in a centralized manner at least one message (9) comprising a sender field, at least one recipient field and a mobile agent (8) in turn comprising an executable code.

13. A system according to claim 12, **characterized in that** the terminal devices (2,3) have an IP connection (7) with the network (1).

14. A system according to any of claims 12 or 13, **characterized in that** at least one of the terminal devices (2,3) is fixed.

15. A system according to any of claims 12 or 13, **characterized in that** at least one of the terminal devices (2,3) is mobile.

16. A system according to claim 15, **characterized in that** at least one of the terminal devices (2,3) has access to a wireless data packet telephony network supporting the GPRS or UMTS standard.

17. A terminal device of a telecommunications network (1) comprising an agent platform (11) that can execute and launch at least one mobile agent (8), **characterized by** comprising:
- means for downloading through said network (1) at least one message (9) comprising a sender field, at least one recipient field and a mobile agent (8);
- means for sending and receiving said at least one message (9) through the network (1).

18. A device according to claim 17, **characterized in that** the means for sending and receiving said at least one message through the network (1) are implemented on an IP connection (7).

19. A device according to claim 18, **characterized in that** it is a fixed terminal.

20. A device according to claim 18, **characterized in that** it is a mobile telephony terminal with access to a wireless data packet network supporting the GPRS or UMTS standard.

21. A telecommunications network comprising at least one device according to any of claims 17 to 20.
